# EUROPEAN PATENT APPLICATION

(11) **EP 1 320 257 A2**
(43) Date of publication of application: **18.06.2003**
(21) Application number: 02027515.2
(22) Date of filing: 06.12.2002
(51) Int. Cl.: H04N 5/445

(54) **Device and method for displaying lists of TV programs**

(30) Priority: 14.12.2001 JP 2001381408
(71) Applicant: Pioneer Corporation, Meguro-ku, Tokyo (JP)
(72) Inventor: Morioka, Ryuichiro, Tokorozawa-City, Saitama (JP); Takahashi, Tsutomu, Tokorozawa-City, Saitama (JP); Yamamura, Gaku, Tokorozawa-City, Saitama (JP); Hasebe, Tsuyoshi, Tokorozawa-City, Saitama (JP); Tanaka, Yoshitaka, Tokorozawa-City, Saitama (JP); Higuchi, Masao, Tokorozawa-City, Saitama (JP); Inagaki, Katsutoshi, Tokorozawa-City, Saitama (JP); Watanabe, Kazutomo, Tokorozawa-City, Saitama (JP); Shirosaki, Yasuo, Tokorozawa-City, Saitama (JP); Minoshima, Kunihiro, Tokorozawa-City, Saitama (JP)
(74) Representative: Klingseisen, Franz, Dipl.-Ing.

(57) **Abstract**

A television signal of a certain TV program is captured for a specified period and memorized in an image memory as a representative image of that TV program. The representative image is read from the image memory when, for example, the same kind of the TV program is found in a TV listing (list of scheduled programs). The representative image is then attached to the program title in the TV listing. Since the representative image presents visual information, a user can learn more about a scheduled program from the TV listing.

## Description

### BACKGROUND OF THE INVENTION

### 1. Field of the Invention

The present invention relates to a device and a method for displaying a listing of broadcast programs.

### 2. Description of the Related Art

It is quite usual for a TV viewer to refer to a TV listing in a newspaper or in a TV program magazine, when he or she chooses a TV program. Nowadays, some web pages on the Internet provide TV listings in their sites so that TV listings may be viewed at a terminal device such as a personal computer. In digital TV broadcasting, Electronic Program Guide (EPG) information is broadcast with TV programs. If a TV viewer has a TV set which can receive digital broadcasts, it is possible to receive EPG information from broadcast data. To do so, the TV viewer probably operates a remote control. The listing of the broadcast programs is created on the basis of the EPG information and displayed on a TV screen. The listing includes program names, contents of the respective programs, and performers and guests in the respective programs in that day for respective TV channels. The displayed TV listing is similar to a TV listing in the newspaper.

However, the TV viewer cannot feel the atmosphere of the program from the word information such as a program name, program contents, and performer's name.

### SUMMARY OF THE INVENTION

An object of the present invention to provide a device and a method for displaying a TV listing which can provide a viewer with an atmosphere of a broadcast program.

According to one aspect of the present invention, there is provided a TV listing display device for displaying a TV listing of programs which are scheduled to be broadcast from TV stations, comprising: a reception unit for receiving broadcast data from the TV stations and demodulating the broadcast data to obtain television signals representing currently broadcast programs; an acquisition unit for obtaining program information representing program titles of the scheduled programs; a capture unit for capturing a signal having a specified length from the television signals, and storing the signal as program image data in an image memory; a read unit for reading the program image data corresponding to the scheduled programs respectively from the image memory to prepare program images; and a display unit for displaying the program titles together with the program images respectively in the TV listing.

Since the TV listing shows the program title together with a representative image, a user can know how the scheduled program looks like from the TV listing.

According to another aspect of the present invention, there is provided a TV listing displaying method for displaying a TV listing of scheduled programs which are scheduled to be broadcast from TV stations on a screen of a display device, comprising the steps of: capturing a signal having a specified length from a television signal representing each of programs broadcast from the TV stations to store the signal as program image data in an image memory; acquiring program information representing program titles of the scheduled programs respectively; reading the program image data from the image memory based on the scheduled programs to prepare program images; and displaying the program titles together with the program images respectively in the TV listing.

### BRIEF DESCRIPTION OF THE DRAWINGS

Fig.1 illustrates a block diagram of a broadcast program recording apparatus that includes a TV listing display device according to one embodiment of the present invention;
Fig. 2 illustrates a part of an operation panel of a remote control;
Fig. 3 illustrates a part of program information memorized in a recorded program information memory;
Fig. 4 illustrates an example of a recorded program list;
Fig. 5 shows a subroutine for generating a program thumbnail image, which is implemented by a system controller;
Fig. 6 illustrates an example of information stored in a starting program memory;
Fig. 7 shows a subroutine for controlling a TV listing display, implemented by the system controller;
Fig. 8 illustrates an example of a TV listing frame shown on a display screen;
Fig. 9 illustrates an example of a basic TV listing shown on the display screen; and
Fig. 10 illustrates an example of a TV listing to which the program thumbnail image is added.

### DETAILED DESCRIPTION OF THE INVENTION

An embodiment of the present invention will be described with reference to the accompanying drawings.

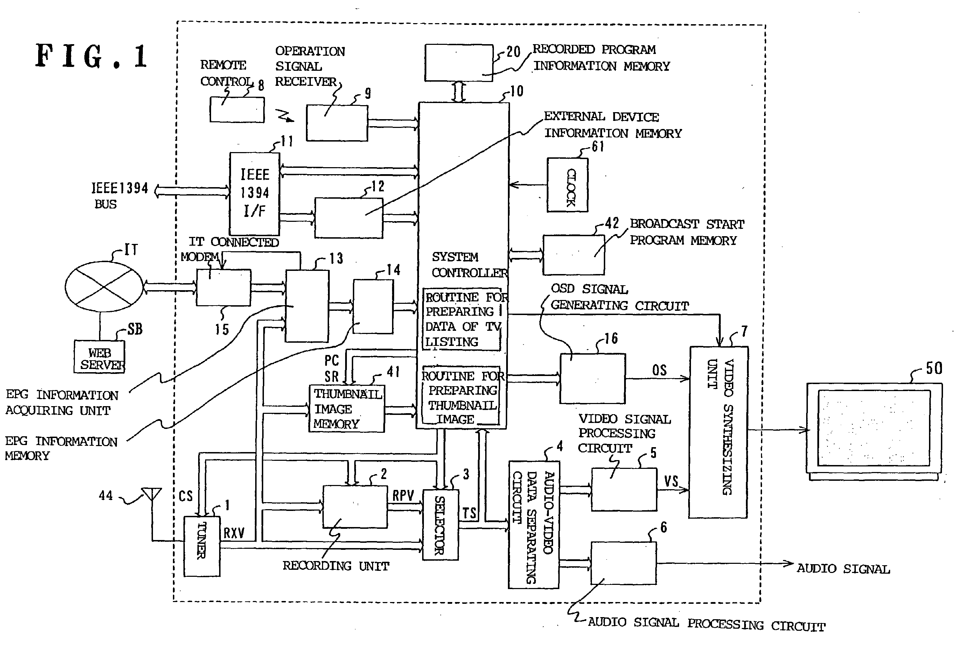

Referring to Fig.1, a schematic configuration of a broadcast program recording apparatus that includes a device for displaying a TV listing is illustrated. The recording apparatus is enclosed by the broken line.

In Fig.1, a TV tuner 1 receives TV broadcast data, including broadcast waves, cable signals/information, network-transmitted signals/information and the like, from TV stations at an antenna 44 or through a cable (not shown), and selects one of the broadcast data on the basis of a channel specified by a channel designation signal CS. The term "network" includes the Internet. The TV tuner 1 produces a received television signal RXV by demodulating the selected broadcast data, and outputs the television signal RXV. The received television signal RXV carries an information block corresponding to a program which is broadcast from a TV station. A recording unit 2 includes a built-in recording media, such as a magnetic disk, an optical disk, a magnetic tape, and a semiconductor memory. The television signal RXV is recorded on the built-in recording medium in response to a recording start command signal sent from a system controller 10. When the recording unit 2 is given a playback start signal and a playback start address from the system controller 10, it reads the television signal from the position designated by the playback start address, and sends this signal to a selector 3 as a playback television signal RPV. The selector 3 selects the received television signal RXV or the playback television signal RPV, in accordance with a selection signal from the system controller 10, and supplies the selected signal as a television signal TS to an audio-video (voice-picture) data separating circuit 4 and the system controller 10. The separating circuit 4 divides the television signal TS into audio data and video data so as to supply the video data to a video signal processing circuit 5 and the audio data to an audio signal processing circuit 6. The audio signal processing circuit 6 demodulates the audio data to obtain an audio signal, and outputs the audio signal. The video signal processing circuit 5 demodulates the video data to obtain a video signal VS, and supplies the video data to an image combine (synthesizing) circuit 7.

An IEEE1394 interface circuit 11 transmits and receives data to and from various information devices connected to an IEEE1394 bus. These devices are called "external devices" in this specification. The IEEE1394 interface circuit 11 packets television signals (including MPEG signals) supplied from the system controller 10 so as to send the packet onto the IEEE1394 bus. The IEEE1394 interface circuit 11 receives audio data, video data, and operation command signals from the external devices via the IEEE1394 bus, and supplies the data and signals to the system controller 10. The system controller 10 sends a command to the recording unit 2 to record the audio and video data. The IEEE1394 interface circuit 11 also captures operating status data of the external devices via the IEEE1394 bus, and sends a command to an external device information memory 12 to memorize the operating status data. The operation status data indicates, for example, the type of the external device concerned, and the present status of operation of that external device. The operation status is, for example, recording, playing back, or stopped. The operation status information also indicates a content title currently recorded or played back. The type of the external device connected to the IEEE1394 bus may be a digital video camera, a personal computer, a DVD recorder, or the like.

If the EPG information data is superposed on the received television signal RXV, which is output from the TV tuner 1, an EPG information acquiring circuit 13 extracts the EPG data from the received television signal RXV and sends a command to an EPG information memory 14 to store the EPG data. The EPG data includes information representing a program title, a broadcast date and hour, a channel number, a genre of a program, program content, and keywords of the program content for each program broadcast from each TV station. The genre of the program may be news, sports, drama, movie, music, kidvid, animation, education, comedy and the like. The keyword of the program content may be a performer, a writer, a director, a series title, a music title, and a geographical area. If the EPG information data is not superposed on the received television signal RXV, the EPG information acquiring circuit 13 sends an EPG request command to an Internet modem 15. In response to the EPG request command, the EPG information acquiring circuit 13 accesses the web server SB connected to the Internet IT. The web server SB keeps EPG information data which shows program titles, broadcast dates and hours, channel numbers, genres of the programs, contents of the programs, keywords of the program contents for the respective programs broadcast from the TV stations. The web server SB also keeps data of rating (audience share) for the respective programs broadcast. In response to the access from the Internet modem 15, the web server SB sends the EPG information data to the Internet modem 15 via the Internet IT. The Internet modem 15 receives the EPG information data via the Internet IT and supplies it to the EPG information acquiring circuit 13. The EPG information acquiring circuit 13 sends a command to the EPG information memory 14 to store the EPG information data.

When a program thumbnail image memory 41 receives an image capturing signal PC from the system controller 10, the program thumbnail image memory 41 accepts the received television signal RXV for one frame long and memorizes it as program thumbnail image data. The program thumbnail image memory 41 stores the program thumbnail image data at an address specified by program title information supplied from the system controller 10. When the program thumbnail image memory 41 receives the program title information and a thumbnail image read signal SR from the system controller 10, the program thumbnail image memory 41 reads the program thumbnail image data corresponding to the program title information and supplies it to the system controller 10.

A clock 61 has a timer function as well as a calendar function. The clock 61 supplies information about today's date and current time to the system controller 10.

An OSD (On Screen Display) signal generation circuit 16 generates an OSD image signal OS, which is ultimately used to display an image on the screen of a display device 50 on the basis of various display data provided by the system controller 10, and supplies it to the image combine circuit 7. Upon receiving an image combine signal from the system controller 10, the image combine circuit 7 supplies the OSD image signal OS superposed on the image signal VS, or the image signal VS, or the OSD image signal OS as an ultimate image signal to the display device 50. The display device 50 displays an image on the display screen based on the image signal.

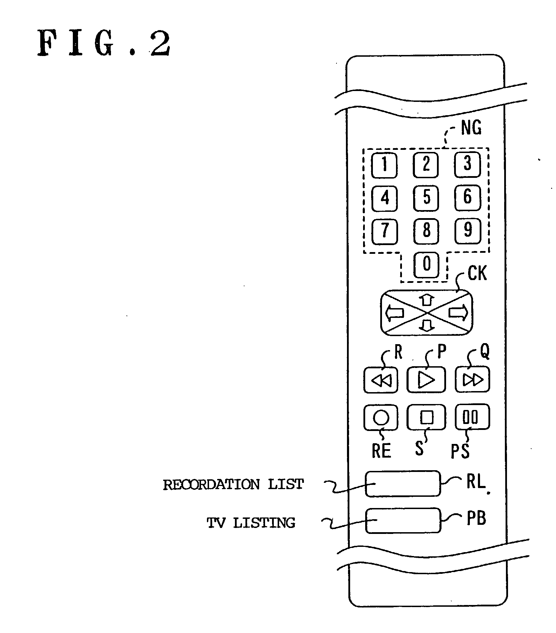

The remote control 8 has a plurality of operation buttons on its operation panel to accept various command operations from a user. Fig.2 shows a part of the operation panel of the remote control 8.

As illustrated in Fig.2, a group of numeric buttons NG for designating a channel of the TV tuner 1 and for inputting numeric values, and a cursor key CK for moving a cursor displayed on the screen of the display device 50 to a desired position are installed on the operation panel of the remote control 8. This operation panel also has a playback button P, a fast-forward button Q, a rewind button R, a pause button PS, a stop button S, and a record button RE such that the user can send a command to the recording device 2 to perform a recording operation, a playback operation and the like. The operation panel has a recorded program list button RL to display a list of programs recorded in the recording unit 2, and a TV listing button PB to display a TV listing of scheduled programs.

The remote control 8 generates operation signals corresponding to the various operation buttons pressed by the user, and sends the operation signals to an operation signal receiving circuit 9. As the operation signal receiving circuit 9 receives the operation signals from the remote control 8, the circuit 9 supplies the operation signals to the system controller 10.

The system controller 10 implements a control in accordance with the operation signals sent from the remote control 8 via the operation signal receiving circuit 9.

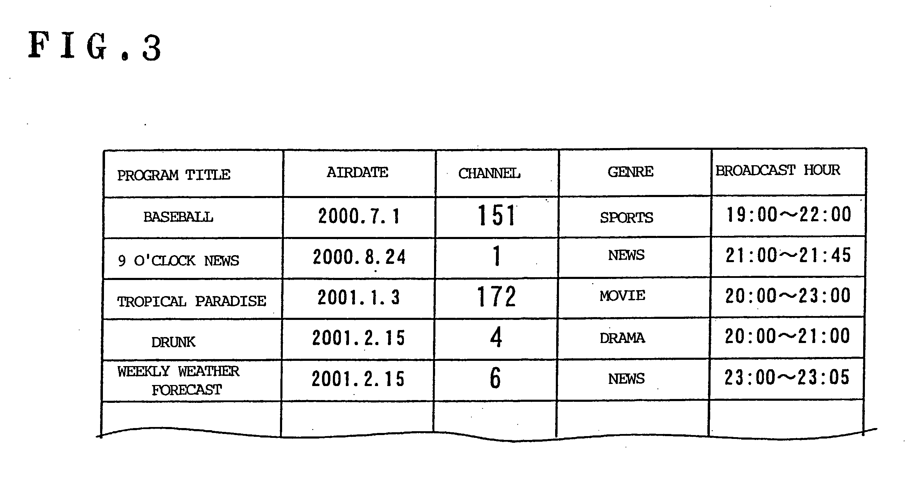

For example, if the user presses a desired numeric button in the numeral button group NG on the remote control 8, the system controller 10 supplies a channel designation signal CS to the TV tuner 1 to select a channel of a TV station corresponding to the pressed numeral button. The TV tuner 1 selects a broadcast data from a TV station corresponding to the channel designated by the channel designation signal CS, and demodulates the broadcast data to obtain the received television signal RXV of a program broadcast from this TV station. Then, if the user presses the recording button RE on the remote control 8, the remote controller 10 supplies a recording start command signal to the recording unit 2. In response to the signal, the recording unit 2 records the received television signal RXV in the built-in recording media. Then, the system controller 10 reads the EPG information of the program (e.g., a program title, a broadcast date and hour, a channel number, and a genre of the program) from the EPG information memory 14, and sends a command to the recorded program information memory 20 to store the EPG data. Therefore, every time a TV program is recorded, program information of the recorded program such as a program title, a broadcast date and hour, a channel number, and a genre of the program is memorized in the recorded program information memory 20 as shown in Fig.3.

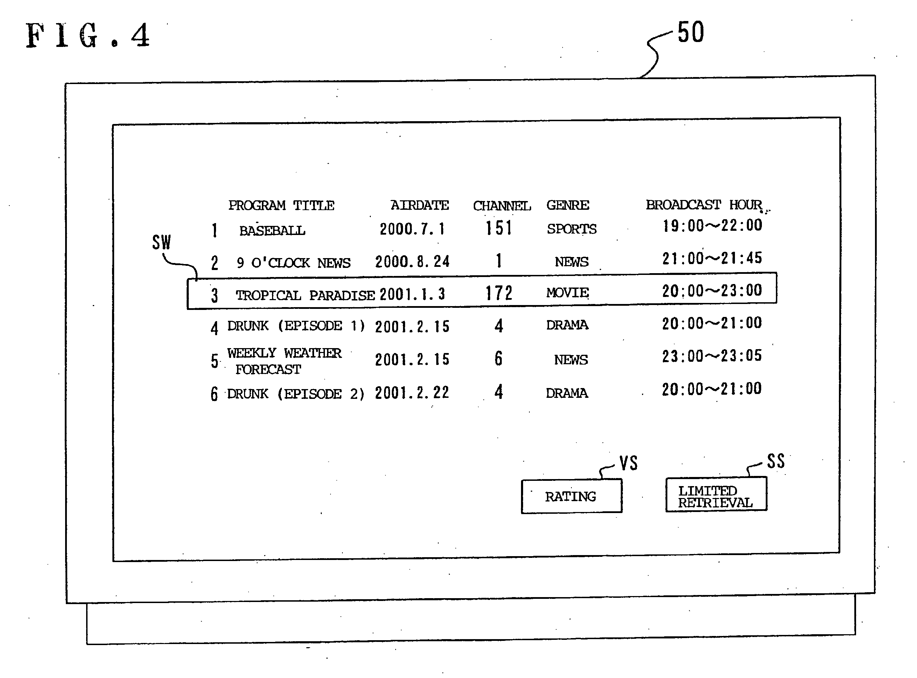

If the user presses the recorded program list button RL on the remote control 8, the system controller 10 reads program information of all the recorded programs memorized in the recorded program information memory 20. Then, the system controller 10 generates display data to display the program information (i. e., the program title, broadcast date and hour, channel number, and program genre) of each program on the screen of the display device 50, and supplies it to the OSD signal generation circuit 16. Accordingly, the display device 50 shows the list of the recorded programs on the screen, as shown in Fig.4. If the user operates the cursor key CK on the remote control 8 to move a selection frame SW over a desirable program in the recorded program list shown in Fig.4 and presses the playback button P on the remote control 8, the system controller 10 supplies a playback starting address of the program which is enclosed by the selection frame SW and a playback starting command signal to the recording unit 2. Accordingly, the program enclosed by the selection frame SW is played back from the recording unit 2, and displayed on the screen of the display device 50.

As described above, it is possible to record a currently broadcast program in the recording unit 2, while playing back a desired recorded program. This is called simultaneous recording and playback.

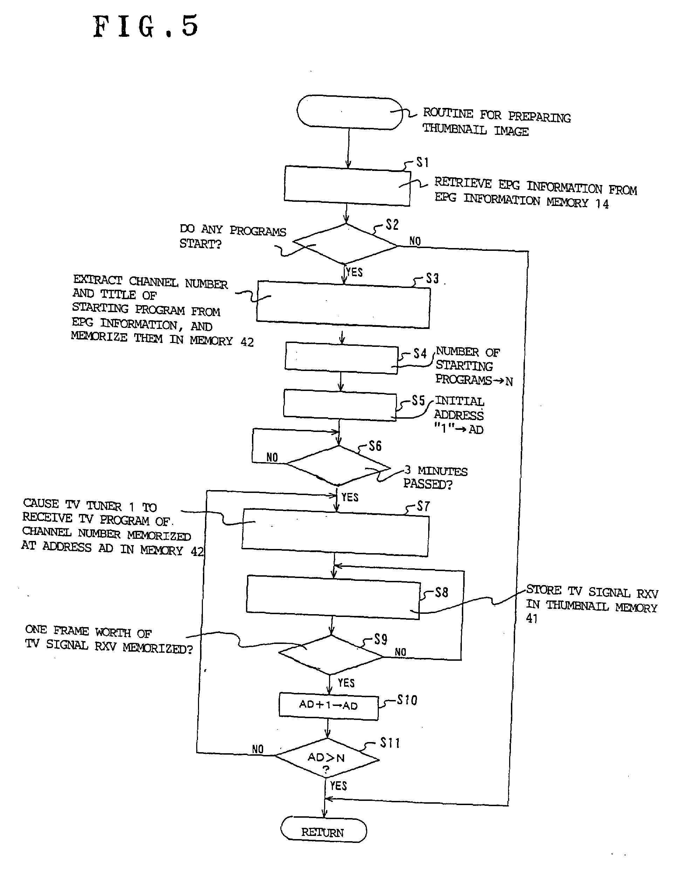

In the meantime, the system controller 10 repeatedly implements the subroutine for generating a program thumbnail image as shown in Fig.5 at predetermined intervals.

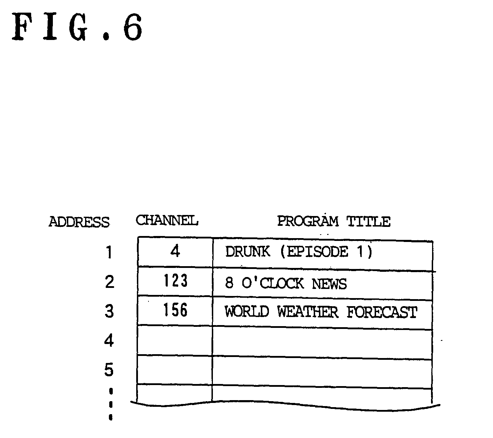

Referring to Fig.5, the system controller 10 firstly obtains the EPG information data memorized in the EPG information memory 14 (Step S1). Then, the system controller 10 determines if there are any programs which are broadcast at the present time, by comparing the date and hour information provided from the clock 61 with the broadcast dates and the start times of the programs shown in the EPG information data (Step 2). If Step 2 determines that the broadcasting of a certain program starts at the present time, the system controller 10 extracts information representing a channel number and a title of that program from the EPG information data and stores them in a broadcast-start-program memory 42 (Step 3). As shown in Fig. 6, the channel number and the program title of the broadcast-start-program are memorized at the address "1" in the memory 42. If three programs are broadcast at the present time, channel numbers and program titles of these programs are memorized at the address "1", "2" and "3" in the memory 42 respectively as shown in Fig.6. The system controller 10 memorizes the number of the broadcast-start-programs as "N" in a first resister (not shown) (Step S4). Then, the system controller 10 memorizes the initial address "1" in the second resister (not shown) as an address AD in the memory 42 (Step S5). After that, the system controller 10 determines whether three minutes has passed from the time indicated by the clock 61 in Step S2 (Step 6). Step 6 is provided to wait for three minutes from the start of the program. Step 6 is repeated until three minutes elapses. If it is determined that three minutes have elapsed, the system controller 10 reads a channel number memorized at the address AD in the memory 42, and supplies the channel designation signal CS corresponding to the channel number to the TV tuner 1 to designate the channel number corresponding to the channel designation signal CS (Step S7). By implementing Step S7, the TV tuner 1 selects and demodulates the broadcast data corresponding to the channel memorized at the address AD in the memory 42, and outputs the received television signal RXV of the program broadcast from the TV station of that channel.

Then the system controller 10 supplies the image capture signal PC to the program thumbnail image memory 41 to memorize the received television signal RXV in connection with the program title memorized at the address AD in the broadcast-start-program memory 42 (Step S8). Subsequently, the system controller 10 determines whether the received television signal RXV for one frame long is memorized in the program thumbnail image memory 41 or not (Step S9). If it is determined that the received television signal RXV for one frame long is not memorized in the memory, the system controller 10 returns to Step S8.

In other words, by the implementation of Steps S8 and S9, the TV program currently broadcast at the channel number memorized at the address AD in the memory 42 is received by the TV tuner 1. Then, one frame worth of image of the received program is stored in the program thumbnail image memory 41 in connection with the program title. The one frame worth of the image is a representative image of the received TV program, and called a "program thumbnail image".

If it is determined at Step S9 that memorization of the signal of one frame long is completed, the system controller 10 adds one to the current value of the address AD memorized in the second resister. The incremented value is stored as a new address AD in the second resister (Step S10). Then, the system controller 10 determines whether the value of the address AD memorized in the second resister is bigger than the number of broadcast start programs N or not (Step S11). If Step S11 determines that the address AD is not bigger than the number of the broadcast start program N, the system controller 10 returns to Step S7 so as to repeat the operation as described above.

By repeating implementation of Steps S7 to S11, the three channel numbers "4", "123" and "156" of the three broadcast start programs memorized in the broadcast-start-program memory 42 as shown in Fig.6 are sequentially selected one by one for a period of one frame worth. The broadcast data receiving operations of the TV tuner 1 are conducted in accordance with these sequentially changing channels. The image of one frame long, which is acquired by channel selection, is captured as the program thumbnail image and memorized in the program thumbnail image memory 41. Since three TV programs are started just now (N=3), three thumbnail images are stored in the thumbnail image memory 41 in connection with the three programs.

If it is determined at Step S11 that the value of the address AD is greater than the number of the broadcast start program N, or it is determined at Step S2 that there is no program starting at the present time, the system controller 10 returns to the implementation of a main routine (not shown) by exiting this subroutine of the thumbnail image generation. In other words, if generation of all the thumbnail images for all the broadcast start programs memorized in the broadcast start program memory 42 has completed, or if there no program starts broadcasting at the present moment, the system controller 10 exits the subroutine of Figure 5.

By repeated implementation of the subroutine of the thumbnail image generation at the specified intervals, thumbnail images of all programs broadcast from TV stations are automatically prepared and memorized in the broadcast start program memory 42 in connection with the TV program names.

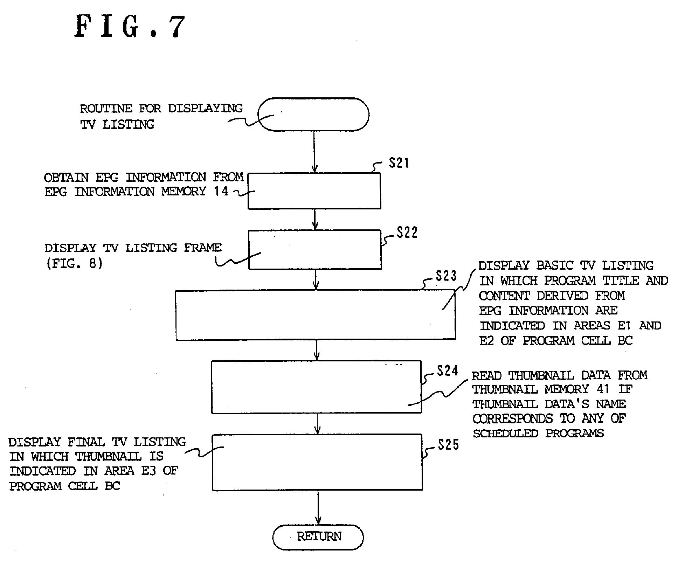

If a user presses the program list button PB on the remote control 8, the system controller 10 executes a subroutine of TV listing display as shown in Fig.7.

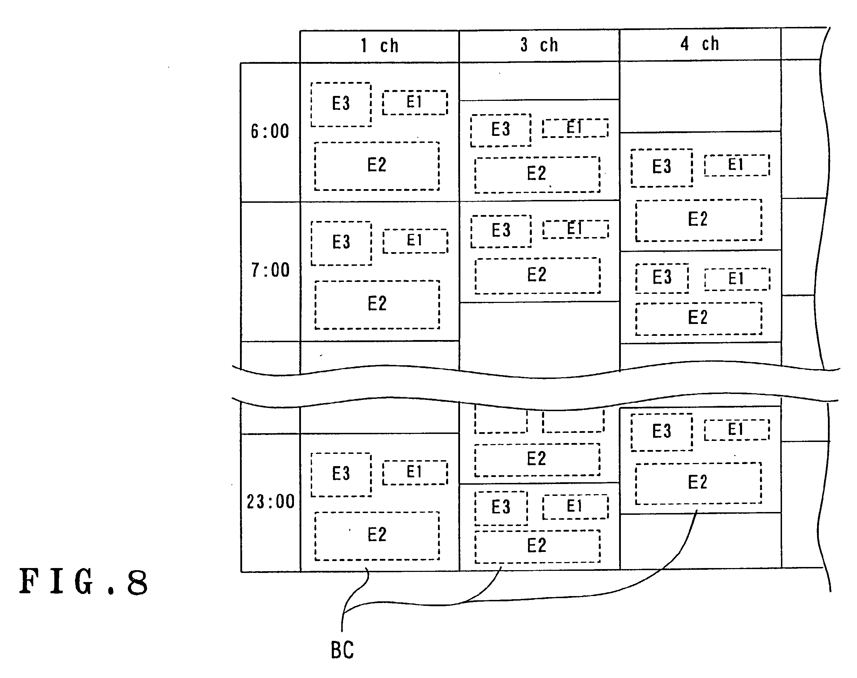

Referring to Fig.7, the system controller 10 firstly captures the EPG information data memorized in the EPG information memory 14 (Step S21). Then, the system controller 10 generates display data to display a TV listing frame as shown in Fig.8 on the screen of the display device 50, and supplies the display data to the OSD signal generation circuit 16 (Step S22). By implementation of Step S22, the screen of the display device 50 displays the TV listing frame which shows channel numbers (or channel names) of the TV stations along the horizontal axis and broadcast hour along the vertical axis. In the TV listing frame, program cells BC are defined for the respective programs to display various information (e.g., program titles, program contents, and thumbnail images) of the programs which are scheduled to be broadcast. Each program cell BC has a program title area E1 for displaying a program title by character (by words, by letter), a program content area E2 for displaying a program content by character, and a thumbnail image area E3 for displaying a thumbnail image.

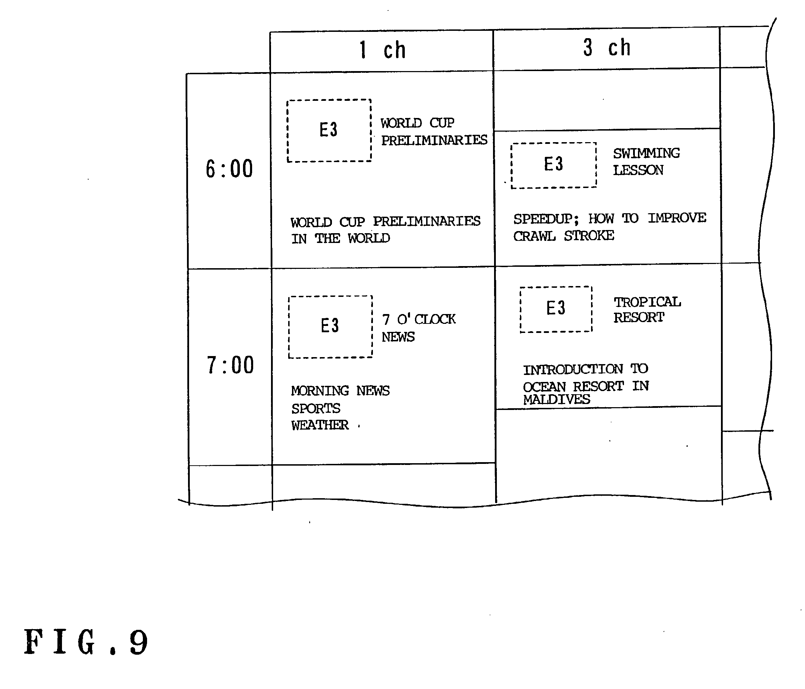

The system controller 10 generates display data to display the character information representing the program titles and program contents of the scheduled TV programs included in the EPG data inside the program title areas E1 and the program content areas E2 of the program cells BC for the respective programs, and supplies the display data to the OSD signal generation circuit 16 (Step S23). By execution of Step S23, the display device 50 displays a basic TV listing as shown in Fig.9 on its screen.

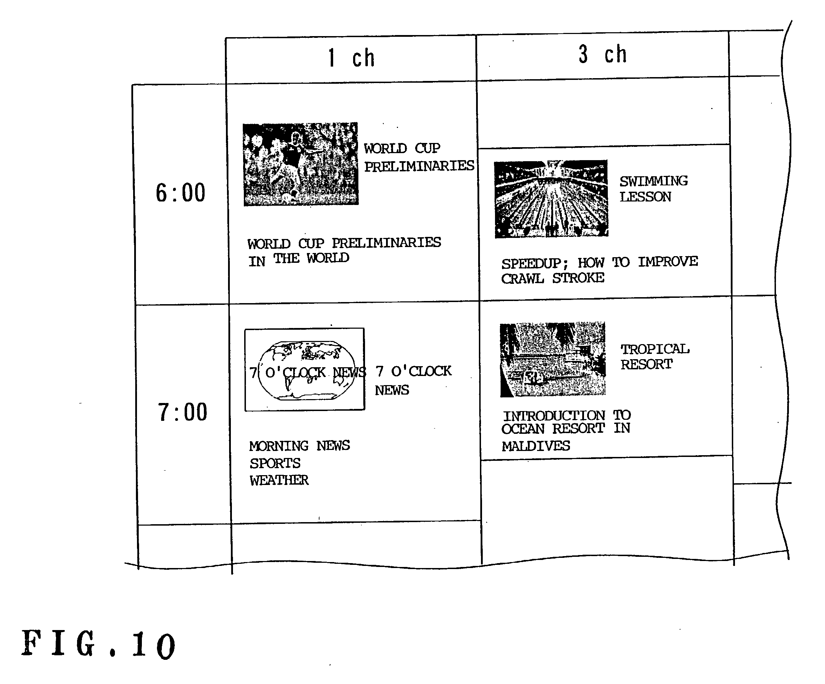

Then, the system controller 10 reads all of the program thumbnail image data from the program thumbnail image memory 41 (Step S24). A shortened program title (data name) is appended to each thumbnail image data in the memory 41. The shortened program tile is a character string which is the same as at least a part of the whole program title. It should be noted that if the whole title of the program is short, the shortened program name coincides with the whole program title. Based on the thumbnail image data, the system controller 10 generates display data to display thumbnail images in a reduced scale within the thumbnail image areas E3 of the program cells BC for the respective programs, and supplies the display data to the OSD signal generation circuit 16 (Step S25). By implementation of Step S25, a TV listing is displayed in the display unit 50 together with the scenes which represent the scheduled programs (i.e., thumbnail images) as shown in Fig.10.

As described above, a representative image (thumbnail image) which shows a certain scene of a broadcast program is captured and memorized with a shortened title in the image memory (thumbnail image memory 41) beforehand. Then, when a program having a title which overlaps the shortened title is found in the scheduled programs (TV listing), the thumbnail image is retrieved from the memory 41 and appended to the program title in the TV listing.

In general, many TV programs (e.g., dramas, comedies and education programs) are broadcast on a weekly basis. The drama title does not change if it is a series. A sub-title, which indicates features of the drama, changes weekly. The number of broadcast (or the episode number) increases every week. The drama is broadcast on the same day of the week at the same time (hour), and the story proceeds week by week. The program title sometimes includes both the drama title and sub-title. The same opening image is usually used at the beginning of the dramas every time. In this embodiment, therefore, a thumbnail image showing one scene in the program which has been broadcast is kept, and the thumbnail image is retrieved and attached to the program title in the displayed TV listing.

Thus, it is possible for the user to learn the mood or context of the scheduled program by referring to the thumbnail image of the program.

In the above described embodiment, a broadcast image of one frame length is taken as the thumbnail image after three minutes has passed from the start of the program. However, the timing to capture the thumbnail image is not limited to three minutes after the start, and the quantity (length) of the image to be captured is not limited to the one frame length. Any suitable timing and quantity are acceptable as long as a program image having a certain length is captured as a thumbnail image after a specified time has passed from the start of the program.

Although the thumbnail image is captured automatically upon elapse of a certain period in the above described embodiment, the thumbnail image may be captured upon a command from a user. For example, when the user is watching a program, the user double-clicks the TV listing button PB on the remote control 8 at a scene that the user thinks the most symbolic. In response to the double-click operation, the system controller 10 implements Steps S8 and S9 shown in Fig.5. As a result, an image which the user is now watching is memorized as the thumbnail image in the thumbnail memory 41.

In the above embodiment, the thumbnail image is accessed on the basis of the (shortened) program title. However, if the EPG data includes an identifier for identifying a drama series, for example, the identifier may be used as a clue to access the thumbnail image instead of the program title.

If the EPG data includes a program identifier of a currently received program, the system controller 10 retrieves the program identifier of that program from the EPG information memorized in the EPG information memory 14, and appends the program identifier to an image of one frame long of the received television signal RXV. Thus, the program identifier and the thumbnail image are stored in the thumbnail image memory 41. When displaying a TV listing, the system controller 10 reads the thumbnail image data, which has the same program identifier as the scheduled program, from the thumbnail image memory 41. Then, the system controller 10 reduces the size of the thumbnail image and places the small thumbnail image in the thumbnail area E3 (Fig.8) in the displayed listing.

## Claims

1. A TV listing display device for displaying a TV listing of scheduled programs which are scheduled to be broadcast from TV stations, comprising:
a reception unit for receiving broadcast data from said TV stations and demodulating the broadcast data to obtain television signals representing currently broadcast programs;
an acquisition unit for obtaining program information representing program titles of said scheduled programs;
a capture unit for capturing a signal having a specified length from said television signals, and storing the signal as program image data in an image memory;
a read unit for reading said program image data corresponding to said scheduled programs respectively from said image memory to prepare program images; and
a display unit for displaying said program titles together with said program images respectively in the TV listing.

2. The TV listing display device according to claim 1, wherein said capture unit makes said program image data correspond to the program titles and stores said program image data in said image memory,
each of said program image data is stored in said image memory together with a data name having the same character string as at least a part of a character string of the program title, and
said read unit reads said program image data from said image memory based on the data name.

3. The TV listing display device according to claim 1, wherein said program information includes a series identifier to identify a series program in the scheduled programs,
said capture unit stores said program image data in connection with said series identifier in said image memory if the program is a series program,
said read unit reads said program image data from said image memory based on the series identifier if the program is the series program.

4. The TV listing display device according to claim 1, wherein said program information includes a broadcast time and a broadcast channel number of each of said scheduled programs, and
the display unit displays said program titles and said program images in the TV listing segmented in accordance with said broadcast times and said broadcast channel numbers.

5. The TV listing display device according to claim 1, wherein the capture unit captures said signal having the specified length after a predetermined period elapses from a start of the program, and the specified length is one frame.

6. The TV listing display device according to claim 1, wherein said acquisition unit acquires said program information from the Internet or said television signals.

7. A TV listing displaying method for displaying a TV listing of scheduled programs which are scheduled to be broadcast from TV stations on a screen of a display device, comprising the steps of:
A) capturing a signal having a specified length from a television signal representing each of programs broadcast from said TV stations to store the signal as program image data in an image memory;
B) acquiring program information representing program titles of said scheduled programs respectively;
C) reading said program image data from said image memory based on said scheduled programs to prepare program images; and
D) displaying said program titles together with said program images respectively in the TV listing.

8. The TV listing display method according to claim 7, wherein said step A includes a step of storing said program image data in said image memory in connection with program titles,
each of said program image data is stored in said image memory together with a data name having the same character string as at least a part of a character string of the program title, and
said step C includes a step of reading said program image data from said image memory based on the data name.

9. The TV listing display method according to claim 7, wherein said program information includes a series identifier to identify a series program in said scheduled programs,
said step A includes a step of making said program image data correspond to said series identifier if the program is a series program, and memorizing said program image data in said image memory in connection with said series identifier,
said step C includes a step of reading said program image data from said image memory based on said series identifier.

10. The TV listing display method according to claim 7, wherein said program information includes a broadcast time and a broadcast channel number of each of said scheduled programs, and
said step D displays said program titles and said program images in the TV listing segmented in accordance with said broadcast times and said broadcast channel numbers.

11. The TV listing display method according to claim 7, wherein said step A captures said signal having the specified length after a predetermined period elapses from a start of the program, and the specified length is one frame.

12. The TV listing display method according to claim 7, wherein said step B acquires said program information from the Internet or said television signals.
